# EUROPÄISCHE PATENTSCHRIFT

(11) **EP 3 879 240 B1**
(45) Veröffentlichungstag und Bekanntmachung des Hinweises auf die Patenterteilung: **30.03.2022**
(21) Anmeldenummer: 20020574.8
(22) Anmeldetag: 27.11.2020
(51) Int. Cl.: G01F 11/02, B05B 1/30, B05B 9/04

(54) **DOSIERVOLUMENMESSEINRICHTUNG**
DOSE VOLUME MEASURING DEVICE
DISPOSITIF DE MESURE DU VOLUME DE DOSAGE

(30) Priorität: 13.03.2020 DE 102020107037; 19.03.2020 DE 102020107647
(43) Veröffentlichungstag der Anmeldung: 15.09.2021
(73) Patentinhaber: Wollin GmbH, 73547 Lorch (DE)
(72) Erfinder: Hauger, Patrick, 73547 Lorch (DE)
(74) Vertreter: Müller, Gottfried

(56) Entgegenhaltungen:
- DE-A1-102017 201 905
- DE-U1-202016 101 408
- US-A1- 2009 211 609

## Beschreibung

Die Erfindung bezieht sich auf eine Dosiervolumenmesseinrichtung zum Messen des Volumens eines über eine Sprühdüsenvorrichtung auszubringenden Trennmittels.

In der WO 95/11092 A1 wird ein Sprühblock eines Sprühwerkzeugs beschrieben, der zum Aufsprühen eines Trennmittels auf die Oberfläche einer Gussform verwendet wird.

Das Volumen des auszubringenden Trennmittels wird bei derartigen Vorrichtungen üblicherweise aus dem Volumen eines Aufnahmeraums für das Trennmittel bestimmt, in den das Trennmittel aus einem Behälter eingeleitet und durch Öffnen einer oder mehrerer Düsen auf die Gießereiform aufgebracht wird. Die exakte Größe des auszubringenden Volumens des Trennmittels hängt darüber hinaus von weiteren Einflussgrößen wie beispielsweise die die Viskosität beeinflussende Temperatur oder Fertigungstoleranzen ab. Daher unterliegt das Volumen des auszubringenden Trennmittels einer gewissen Schwankungsbreite.

Aus der US 4,974,755 ist eine Dosiervolumeneinrichtung zum Ausbringen eines definierten Volumens einer viskosen Flüssigkeit bekannt. Die Dosiervolumeneinrichtung umfasst einen Messzylinder zur Aufnahme des auszubringenden Volumens der viskosen Flüssigkeit und einen Aktuator zum Öffnen und Schließen eines Auslasses des Messzylinders. Darüber hinaus umfasst die Dosiervolumeneinrichtung eine Sensoreinrichtung mit Positionssensoren, über die die Position eines luftbeaufschlagten Zylinders messbar ist, der in Kontakt mit dem Messzylinder zur Aufnahme der viskosen Flüssigkeit steht.

Die DE 23 44 143 A offenbart eine Vorrichtung zur Bestimmung der Stellung des Kolbens eines hydraulisch oder pneumatisch betriebenen Zylinders. Die axiale Bewegung des Kolbens wird in eine Drehbewegung einer Achswelle umgewandelt. Am Außenmantel des Zylinders ist ein Anzeigegerät angeordnet, mit dem die Achswelle in Verbindung steht.

Aus der US 7,059,238 B2 ist eine Vorrichtung zur Positionsbestimmung des Kolbens eines Hydraulikzylinders mithilfe eines Sensors bekannt. Der Sensor befindet sich an einer Kolbenstange des Kolbens und wird bei einer Kolbenbewegung relativ zu einer Sensorstange verstellt.

Die US 4,552,055 offenbart einen hydraulischen Drucksteller mit einem Stellkolben in einem Zylinder, dessen aktuelle Position sensorisch ermittelt wird.

Aus der DE 20 2008 017 382 U1 ist eine Sprühdüse für ein Sprühwerkzeug zum Aufbringen eines Trennmittels in eine Gussform bekannt. Das Trennmittel ist in einen Dosierraum der Sprühdüse einführbar, dessen Volumen über ein Stellglied regulierbar ist, wobei eine Volumenreduzierung des Dosierraums eine Verdrängung des Trennmittels bewirkt.

Die DE 10 2008 062 846 A1 offenbart ein Verfahren zum Überwachen eines Kolbendosierers, über den eine gewünschte Dosiermenge eines Mittels über die Kolbenbewegung ausgebracht wird. Ein Zylinder, in welchem sich der Dosierkolben bewegt, ist mit einer Einlassleitung und einer Auslassleitung verbunden, in die jeweils ein Ventil mit einem Schließkolben eingebracht sind. Die Ventilstellung im Einlass- und Auslassventil wird sensorisch detektiert.

In der US 2009/211609 A1 werden ein Farbdosierzylinder zur Versorgung einer Lackaustragsdüse mit einem Lackmaterial für Lackieranlagen, eine Lackieranlage und ein Verfahren zum Spülen von Farbdosierzylindern beschrieben. Der Farbdosierzylinder umfasst eine Spüleinrichtung mit zwei Spülmittelaustrittsöffnungen.

Die DE 20 2016 101 408 U1 offenbart eine Vorrichtung zur Durchführung einer Kolbendosierung zu exakten Dosierung von Flüssigkeiten, mit einem Zylinder, einem darin geführten motorisch angetriebenen Hohlkolben mit einem stirnseitig ausgebildeten Hohlraum und mit einem im Inneren verlaufenden Verbindungskanal zwischen dem Hohlraum und einer Austrittsöffnung in seiner Wandung, einer von der Austrittsöffnung im Hohlkolben abgehende erste Verbindungsleitung, einem 2-Wege-Umschaltventil, das an der ersten Verbindungsleitung angeschlossen ist und welches mit einem Vorratsbehälter für die zu dosierende Flüssigkeit in Verbindung steht, und einer mit dem Umschaltventil verbundenen zweiten Verbindungsleitung mit auf ihrem Ende sitzender Einspritzdüse, wobei das Umschaltventil in einer Stellung die Verbindung zwischen Vorratsbehälter und Verbindungskanal einerseits und in der anderen Stellung die Verbindung zwischen Verbindungskanal und Einspritzdüse andererseits bereitstellt.

Die DE 10 2017 201 905 A1 zeigt ein Steuerventil zur Versorgung von Düsen mit einem Druckfluid, mit einem Ventilgehäuse mit einem Druckanschluss für die Zuführung des Druckfluids und einem Gehäusehohlraum, wobei an einem Umfang des Gehäusehohlraums eine erste Anschlussöffnung für eine erste Düse und axial zur ersten Anschlussöffnung versetzt eine zweite Anschlussöffnung angeordnet sind, mit einem Ventilkolben, der im Gehäusehohlraum zwischen einer ersten Endposition und einer zweiten Endposition axial hin und her beweglich und durch Beaufschlagung mit einem in Richtung auf die zweite Endposition wirkenden Druck des Druckfluids aus einer ersten Kolbenposition in eine zweite Kolbenposition beweglich ist, und mit einer Federeinrichtung zur Erzeugung einer auf den Ventilkolben dem Druck des Druckfluids entgegenwirkenden Federkraft, wobei die erste Anschlussöffnung mit dem Druckanschluss verbunden ist, wenn der Ventilkolben die erste Kolbenposition einnimmt, der Ventilkolben in der ersten Kolbenposition die zweite Anschlussöffnung vom Druckanschluss trennt und die zweite Anschlussöffnung mit dem Druckanschluss verbunden ist, wenn der Ventilkolben die zweite Kolbenposition einnimmt.

Der Erfindung liegt die Aufgabe zugrunde, mit einfachen Maßnahmen das Trennmittelvolumen, welches über ein Sprühdüsenvorrichtung in einen Hohlraum oder auf die Oberfläche einer Gussform aufgebracht wird, mit hoher Genauigkeit zu bestimmen.

Diese Aufgabe wird erfindungsgemäß mit den Merkmalen der unabhängigen Ansprüche gelöst. Die abhängigen Ansprüche geben zweckmäßige Weiterbildungen an.

Die erfindungsgemäße Dosiervolumenmesseinrichtung kann mit einem Sprühwerkzeug zum Aufbringen eines Trennmittels in einen Hohlraum oder auf eine Oberfläche einer Gussform kombiniert werden. Mit der Dosiervolumenmesseinrichtung kann das Volumen des Trennmittels gemessen werden, das über eine Sprühdüsenvorrichtung, welche Bestandteil des Sprühwerkzeugs ist, ausgebracht wird.

Die Dosiervolumenmesseinrichtung umfasst einen Messkolben, der in einem Verstellraum in einem Messgehäuse der Dosiervolumenmesseinrichtung verstellbar gelagert ist. Der Verstellraum im Messgehäuse ist mit einer Zuströmöffnung und mit einer Abströmöffnung für das Trennmittel versehen, wobei über die Zuströmöffnung Trennmittel in den Verstellraum hineinleitbar und über die Abströmöffnung das Trennmittel aus dem Verstellraum ableitbar ist. Des Weiteren umfasst die Dosiervolumenmesseinrichtung eine Sensoreinrichtung zum Ermitteln der Stellbewegung des Messkolbens im Verstellraum.

Diese Ausführung erlaubt es, über die Sensoreinrichtung die Stellbewegung des Messkolbens im Verstellraum zu ermitteln und aus der Stellbewegung des Messkolbens auf das beim Sprühvorgang ausgegebene Trennmittelvolumen zu schließen. Das Trennmittel steht unter Druck und wird mit dem Öffnen der Sprühdüsenvorrichtung aus dem Verstellraum abgeleitet. Das durch die Ableitung des Trennmittels freiwerdende Volumen im Verstellraum wird von dem Messkolben eingenommen, dessen Stellbewegung über die Sensoreinrichtung gemessen wird. Aufgrund der bekannten Geometriedaten des Messkolbens - Querschnittsfläche, insbesondere der Durchmesser bei runden Messkolben - kann mit dem Messen der Stellbewegung des Messkolbens das Volumen des über die Sprühdüsenvorrichtung ausgebrachten Trennmittels berechnet werden. Die Stellbewegung des Messkolbens ist vorteilhafterweise eine lineare, translatorische Stellbewegung.

Diese Ausführung erlaubt es, das Volumen des Trennmittels, welches über die Sprühdüsenvorrichtung ausgeleitet wird, mit hoher Genauigkeit zu ermitteln. Das Volumen kann bei jedem Sprühvorgang bestimmt werden. Dies ermöglicht eine permanente Überwachung des Sprühvorganges und das Feststellen von Unregelmäßigkeiten wie zum Beispiel eine sich vergrößernde Varianz im Hinblick auf das Volumen des auszusprühenden Trennmittels. Aufgrund der hohen Genauigkeit, mit der das Volumen bei jedem Sprühvorgang bestimmt werden kann, kann auch der Ausfall einer Düse in der Sprühdüsenvorrichtung festgestellt werden.

Vorteilhafterweise ist das Trennmittel, welches sich in dem Verstellraum befindet, unter Druck gesetzt. Hierfür kann der Messkolben in Richtung auf das Trennmittel kraftbeaufschlagt sein, insbesondere mithilfe eines Kolbenverstellmediums, das auf der der Zuström- und Abströmöffnung abgewandten Seite des Messkolbens auf diesen wirkt. Im Bereich einer Stirnseite des Kolbens befindet sich somit die Zuströmöffnung und die Abströmöffnung für das Trennmittel, im Bereich der gegenüberliegenden Seite wirkt das Kolbenverstellmedium auf den Messkolben. Bei dem Kolbenverstellmedium handelt es sich insbesondere um Druckluft.

Die Zufuhr des Kolbenverstellmediums, insbesondere der Druckluft, in den Verstellraum zum Beaufschlagen des Messkolbens ist vorzugsweise einstellbar ausgeführt. Dies ermöglicht es, das Kolbenverstellmedium während des Betriebs auf eine Seite des Messkolbens im Verstellraum einzuleiten und das Einleiten des Kolbenverstellmediums zu unterbrechen. Dementsprechend kann der Messkolben in verschiedenen Phasen während des Betriebs mit einer Kraft beaufschlagt werden, die den Messkolben gegen das Trennmittel drückt und dieses unter Druck setzt. Die Einstellung der Zufuhr des Kolbenverstellmediums in den Verstellraum erfolgt vorzugsweise selbsttätig über einen Aktuator.

Gemäß einer weiteren vorteilhaften Ausführung umfasst die Sensoreinrichtung zur Ermittlung der Stellbewegung des Messkolbens im Verstellraum einen Signalgeber, der auf dem Messkolben angeordnet ist, sowie einen Signalnehmer, der im oder am Gehäuse der Dosiervolumenmesseinrichtung bzw. einem Bauteil im oder am Gehäuse angeordnet ist. Als Signalgeber wird beispielsweise ein Permanentmagnet verwendet, der auf dem Messkolben befestigt ist. Als Signalnehmer kann eine Messstange verwendet werden, die in den Verstellraum hineinragt und in bevorzugter Ausführung von dem als Hohlkörper ausgebildeten Messkörper umgriffen ist. Die Sensoreinrichtung arbeitet in dieser Ausführung nach dem magnetostriktivem Messprinzip, aus dem die Messkolbenbewegung bestimmt werden kann.

In weiterer bevorzugter Ausführung umfasst die Sensoreinrichtung einen Wegaufnehmer, der am Gehäuse an einer Stirnseite des Verstellraums angeordnet ist, insbesondere außerhalb des Verstellraums, und in welchem das Messsignal des Signalnehmers aufgenommen wird. In der Ausführung des Signalgebers als Permanentmagnet wird das als induzierte Spannung ausgeführte Messsignal von der Messstange zu dem Wegaufnehmer an der Stirnseite des Verstellraums übertragen, in welchem aus der induzierten Spannung der Messkolbenweg und das Volumen des ausgebrachten Trennmittels berechnet werden. Der Wegaufnehmer kann gegebenenfalls mit einer zentralen Steuerungseinrichtung kommunizieren kann, in welcher das Messsignal weiterverarbeitet wird.

Der Messkolben ist als Hohlkörper ausgebildet, und in die Stirnseite des Messkolbens ist ein Überströmkanal eingebracht. Der Überströmkanal verbindet den Innenraum des Messkolbens mit dem Verstellraum. Die Stirnseite des Messkolbens füllt vorteilhafterweise den Verstellraum vollständig aus, so dass zwischen der Stirnseite des Messkolbens und dem stirnseitigen Ende des Verstellraums ein Luftreservoir gebildet ist, das über den Überströmkanal mit dem Innenraum des Messkolbens kommuniziert.

Bei einer Verschiebung des Messkolbens im Verstellraum in Richtung des stirnseitig liegenden Luftreservoirs kann die darin befindliche Luft über den Überströmkanal in der Stirnseite des Messkolbens in den Messkolbeninnenraum gelangen, von wo aus die Luft in einen Zwischenraum zwischen der Mantelfläche des Messkolbens und dem Innenmantel des Verstellraums strömen kann. Ein in diesem Zwischenraum vorhandenes Trennmittel wird von der Luft, die mit dem Erreichen der Gleichgewichtsposition des Messkolbens den gleichen Druck wie die Druckluft aus dem Druckluftanschluss einnimmt, unter Druck gesetzt.

Gemäß noch einer weiteren vorteilhaften Ausführung ist an der Mantelfläche des Messkolbens ein Kolbendichtring angeordnet, der das Trennmittel im Verstellraum von einem gasförmigen Kolbenverstellmittel, insbesondere der Druckluft, separiert. Bei einer Druckluftbeaufschlagung des Messkolbens wird dieser im Verstellraum verschoben und setzt das Trennmittel unter Druck, wodurch gegebenenfalls verbliebene Luft komprimiert wird.

In eine Zufuhrleitung des Trennmittels zum Verstellraum, die über die Zufuhröffnung in den Verstellraum einmündet, ist vorteilhafterweise ein Rückschlagventil integriert, das ohne Kraftbeaufschlagung des Messkolbens in Richtung auf das Trennmittel in Öffnungsstellung steht und mit Kraftbeaufschlagung des Messkolbens in Richtung auf das Trennmittel geschlossen wird. Dementsprechend kann Trennmittel aus einem Trennmittelreservoir in den Verstellraum einströmen, sofern der Verstellraum nicht über den Messkolben kraftbeaufschlagt, insbesondere mit Druckluft beaufschlagt wird. Sobald eine Kraft, insbesondere Druckluft aufgegeben wird, schließt das Rückschlagventil, wodurch verhindert wird, dass Trennmittel in die Zufuhrleitung zurückgefördert wird.

Ein weiterer Aspekt der Erfindung bezieht sich auf eine Kombination eines Sprühwerkzeugs, das eine Sprühdüsenvorrichtung mit einer oder mehreren Sprühdüsen zum Aufbringen eines Trennmittels in einen Hohlraum oder auf eine Oberfläche einer Gussform umfasst, mit einer vorbeschriebenen Dosiervolumenmesseinrichtung zum Messen des Volumens des über die Sprühdüsenvorrichtung auszubringenden Trennmittels.

Noch ein weiterer Aspekt der Erfindung bezieht sich auf ein Verfahren zum Betätigen einer vorbeschriebenen Dosiervolumenmesseinrichtung. Hierbei wird in einem ersten Schritt vor dem Ausbringen des Trennmittels über die Sprühdüsenvorrichtung zunächst Druckluft in den Bereich einer Stirnseite des Messkolbens geleitet und der Verstellweg des Messkolbens sensiert. Aus dem sensierten Verstellweg des Messkolbens kann auf vorhandene Luft in der Dosiervolumenmesseinrichtung und/oder im Sprühwerkzeug geschlossen werden. Übersteigt der sensierte Verstellweg des Messkolbens einen Grenzwert, so befindet sich zu viel Luft in den Mittelleitungen der Dosiervolumenmesseinrichtung und/oder des Sprühwerkzeugs, und es wird ein Fehlersignal erzeugt. Daraufhin kann eine Entlüftung der Dosiervolumenmesseinrichtung und/oder des Sprühwerkzeugs durchgeführt werden, bevor das Sprühwerkzeug seinen regulären Betrieb aufnimmt.

In einem sich hieran anschließenden, zweiten Schritt erfolgt die Messung des während eines Sprühvorgangs über die Sprühdüsenvorrichtung ausgebrachten Trennmittelvolumens, indem der Verstellweg des Messkolbens sensiert wird, den der Messkolben während des Sprühvorgangs zurücklegt. Durch das Ausbringen des Trennmittels während des Sprühvorgangs kann der Messkolben das freiwerdende Volumen im Verstellraum ausfüllen. Hierbei legt der Messkolben, der mit der Druckluft beaufschlagt ist, einen Verstellweg zurück, der über die Dosiervolumenmesseinrichtung sensiert wird. Aus dem zurückgelegten Verstellweg des Messkolbens kann auf das Volumen des während des Sprühvorgangs ausgebrachten Trennmittels geschlossen werden.

Nach Beendigung eines Sprühvorgangs wird die Druckluftzufuhr unterbrochen, woraufhin das Rückschlagventil in der Zufuhrleitung des Trennmittels öffnet und Trennmittel aus dem Trennmittelreservoir in den Verstellraum einströmen kann. Hierbei wird der Messkolben in eine zurückgefahrene Anschlagsposition verstellt. Im Anschluss hieran kann erneut der Messkolben mit Druckluft beaufschlagt werden, woraufhin das vorbeschriebene Verfahren zum Durchführen eines weiteren Sprühvorgangs von vorne beginnt.

Weitere Vorteile und zweckmäßige Ausführungen sind den weiteren Ansprüchen, der Figurenbeschreibung und den Zeichnungen zu entnehmen. Es zeigen:
- Fig. 1: eine Draufsicht auf eine Dosiervolumenmesseinrichtung,
- Fig. 2: einen Schnitt durch die Dosiervolumenmesseinrichtung gemäß Schnittlinie II-II aus Fig. 1,
- Fig. 3: einen Schnitt durch die Dosiervolumenmesseinrichtung gemäß Schnittlinie III-III aus Fig. 1,
- Fig. 4: einen Schnitt längs durch einen Messkolben der Dosiervolumenmesseinrichtung.

In den Figuren sind gleiche Bauteile mit gleichen Bezugszeichen versehen.

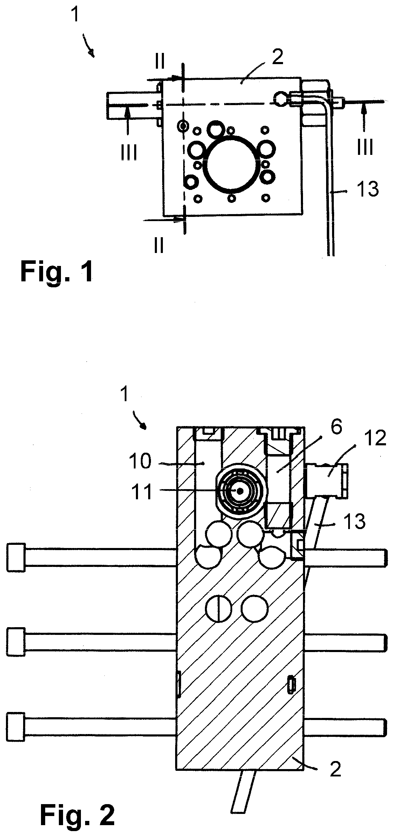

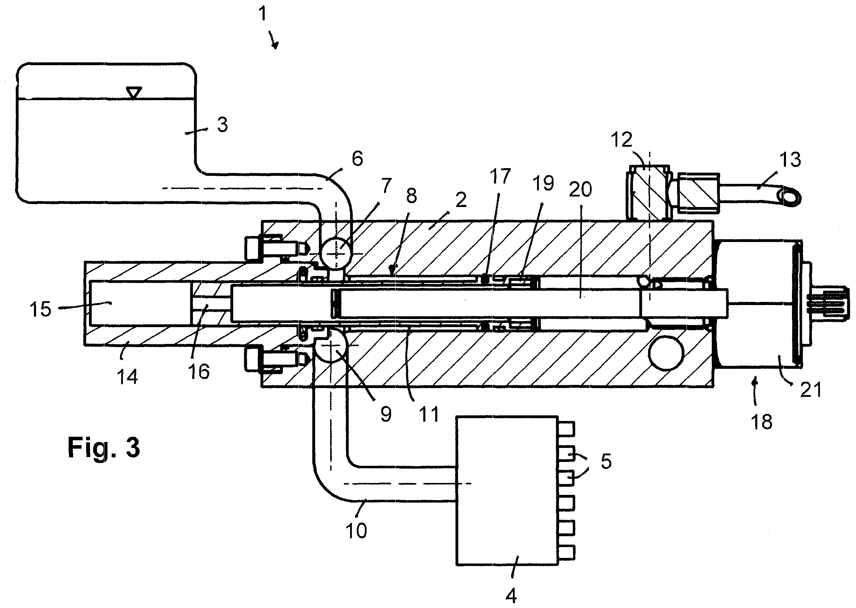

In den Fig. 1 bis 3 ist eine Dosiervolumenmesseinrichtung 1 dargestellt, mit der das Volumen eines Trennmittels wie beispielsweise Öl bestimmt werden kann, das in einen Hohlraum oder auf eine Oberfläche einer Gussform unter Zuhilfenahme von Druckluft aufgesprüht wird. Wie in Fig. 3 dargestellt, befindet sich in einem Trennmittelbehälter 3 ein Trennmittel, das in ein Gehäuse 2 der Dosiervolumenmesseinrichtung 1 eingeleitet und anschließend einer Sprühdüsenvorrichtung 4 zugeführt wird, an der mehrere Sprühdüsen 5 sitzen, über die das Trennmittel ausgebracht wird. Das Gehäuse 2 der Dosiervolumenmesseinrichtung 1 bildet ein Messgehäuse. Die Sprühdüsenvorrichtung 4 und die Sprühdüsen 5 bilden ein Sprühwerkzeug. Das Trennmittel wird über eine Zuströmleitung 6 vom Trennmittelbehälter 3 zu einer Zuströmöffnung 7 geführt, die in einen Verstellraum 8 im Gehäuse 2 mündet. Vom Verstellraum 8 gelangt das Trennmittel 6 über eine Abströmöffnung 9 und eine Abströmleitung 10 zu der Sprühdüsenvorrichtung 4.

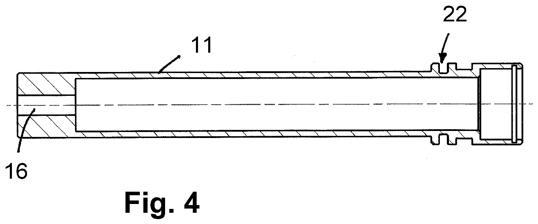

In dem Verstellraum 8 im Gehäuse 2 ist ein Messkolben 11 aufgenommen, der in Fig. 4 in Einzeldarstellung gezeigt und Teil einer Dosiervolumenmesseinrichtung zum Messen des Volumens des über die Sprühdüsenvorrichtung 4 auszubringenden Trennmittels ist. Der Verstellraum 8 sowie der darin angeordnete Messkolben 11 weisen eine runde Querschnittsform auf. Der Messkolben 11 kann entlang seiner Längsachse in dem Verstellraum 8 hin und her bewegt werden. Diese translatorische Verstellbewegung kann zum Ermitteln des Volumens des ausgebrachten Trennmittels herangezogen werden.

Die Dosiervolumenmesseinrichtung 1 ist außerdem mit einem Druckluftanschluss 12 versehen, an den eine Druckluftleitung 13 anschließbar ist. Über den Druckluftanschluss 12 kann Druckluft in den Verstellraum 8 im Bereich einer ersten, der Zuströmöffnung 7 und der Abströmöffnung 9 abgewandten Stirnseite des Messkolbens 11 eingeleitet werden.

An das Gehäuse 2 der Dosiervolumenmesseinrichtung 1 ist ein zylindrischer Deckel 14 angeschraubt, der den Verstellraum 8 nach außen abschließt, wobei im Deckel 14 ein Raum mit einem zusätzlichen Luftreservoir 15 gebildet ist, das sich in axialer Verlängerung des Verstellraums 8 befindet. Das Luftreservoir 15 dient zur Abschottung des Messkolbens 11 gegenüber der Umgebung.

Der Messkolben 11 weist in einem stirnseitigen Endabschnitt, der dem Deckel 14 zugewandt ist, einen axialen Überströmkanal 16 auf, der das Luftreservoir 15 im Deckel 14 mit dem Inneren des als Hohlkörper ausgeführten Messkolbens 11 verbindet. Der Deckel 14 mit dem Luftreservoir 15 und die Luftzufuhr für die Druckluft über den Druckluftanschluss 12 befinden sich an gegenüberliegenden Stirnseiten des Messkolbens 11.

Auf der Mantelfläche des Messkolbens 11 sitzt ein Kolbendichtring 17, der das Trennmittel im Verstellraum 8 von der Druckluftzufuhr separiert.

Die Dosiervolumenmesseinrichtung 1 ist mit einer Sensoreinrichtung 18 zum Ermitteln der axialen Verstellbewegung des Messkolbens 11 im Verstellraum 8 ausgestattet. Die Sensoreinrichtung 18 umfasst als Signalgeber einen Permanentmagneten 19, als Signalnehmer eine Messstange 20 und einen Wegaufnehmer 21 auf der dem Deckel 14 gegenüberliegenden Seite im Gehäuse 2 der Dosiervolumenmesseinrichtung 1. Der Permanentmagnet 19 sitzt fest auf der Mantelfläche des Messkolbens 11 auf. Die koaxial zum Messkolben 11 liegende Messstange 20 ist gehäusefest angeordnet und erstreckt sich axial in den Messkolben 11 hinein, dessen axiale Verstellbewegung relativ zu der Messstange 20 ausgeführt wird. Die Messstange 20 ist mit dem randseitig am Gehäuse 2 angeordneten Wegaufnehmer 21 verbunden, in welchem das Messsignal aufbereitet wird. Bei einer Bewegung des Messkolbens 11 wird auch der Permanentmagnet 19 axial verstellt, wobei das sich ändernde Magnetfeld des Permanentmagneten 19 in der Messstange 20 eine Spannung induziert, die in dem Wegaufnehmer 21 in einen Stellweg des Messkolbens 11 umgerechnet wird. Aus dem Stellweg des Messkolbens 11 kann auf das Volumen geschlossen werden, welches bei der axialen Stellbewegung des Messkolbens 11 im Verstellraum 8 verdrängt bzw. freigegeben wird.

Die Ermittlung des Volumens des über die Sprühdüsenvorrichtung 4 ausgebrachten Trennmittels 6 verläuft folgendermaßen:
Die Dosiervolumenmesseinrichtung 1 wird mit Trennmittel aus dem Trennmittelbehälter 3 befüllt. Dabei umfließt das Trennmittel von Zuströmöffnung 7 nach Abströmöffnung 9 den Messkolben 11 und füllt den Verstellraum 8. Ist die Befüllung abgeschlossen, wird der Messkolben 11 aufgrund des drucklosen Druckluftanschlusses 12 in der Darstellung Fig. 3 nach rechts im Bild bewegt, bis die rechte Stirnseite des Überströmkanals 16 an der linken Stirnseite der Messstange 20 anstößt.

Anschließend wird über den einstellbaren Druckluftanschluss 12 Druckluft in den Verstellraum 8 eingeleitet. Die Druckluft im Verstellraum 8 bewegt den Messkolben 11 in der Darstellung gemäß Fig. 3 nach links in Richtung des Luftreservoirs 15 im Deckel 14. Ein eventuell in der Dosiervolumenmesseinrichtung 1 vorhandenes Luftpolster wird durch die Verstellbewegung des Messkolbens 11 so weit komprimiert, bis der Messkolben 11 durch die Verstellbewegung in Richtung des Luftreservoirs 15 einen Gleichgewichtszustand einnimmt. Über den Überströmkanal 16 an der Stirnseite des Messkolbens 11 kann hierbei ein Teil der Luft aus dem Luftreservoir 15 in das Innere des Messkolbens 11 gelangen. Das Luftreservoir 15 ist mit dem Druckluftanschluss 12 dauerhaft verbunden. Dadurch findet ständiger Luftaustausch statt, und bei einer Bewegung des Kolbens 11 hat das Luftreservoir 15 keinen Einfluss auf die Kolbenbewegung.

Dieser erste Schritt bei der Verstellbewegung des Messkolbens 11 erfolgt bei geschlossener Sprühdüse 5. Durch die Bewegung des Verstellkolbens 11 und den Übertritt der Luft aus dem Luftreservoir 15 über den Überströmkanal 16 in das Innere des Messkolbens 11 gelangt diese Luft in einen Zwischenraum zwischen der Mantelfläche des Messkolbens 11 und dem Innenmantel des Verstellraums 8. Trennmittel und Luft bleiben jederzeit durch den Kolbendichtring 17 voneinander getrennt. Die Luft kann zwischen der rechten Seite des Messkolbens und dem Luftreservoir 15 ungehindert wandern. Ein in diesem Zwischenraum auf der linken Seite des Messkolbens 11 im äußeren Bereich zwischen dem Messkolben 11 und der Mantelfläche des Verstellraums 8 vorhandenes Trennmittel wird von der Luft, die mit dem Erreichen der Gleichgewichtsposition des Messkolbens 11 den gleichen Druck wie die Druckluft aus dem Druckluftanschluss 12 einnimmt, unter Druck gesetzt. Dieser Druck schließt ein Rückschlagventil, welches in die Zuströmleitung 6 integriert ist, so dass in dieser Phase kein Trennmittel aus dem Trennmittelbehälter 3 in den Verstellraum 8 gelangen kann. Aufgrund des Rückschlagventils kann von dem Messkolben 11 kein Trennmittel in die Zuströmleitung 6 zurückgedrückt werden.

In diesem Zustand ist der Luftdruck im Druckluftanschluss 12, und somit auch der über den Messkolben 11 auf das Trennmittel übertragene Druck, welches am Rückschlagventil anliegt, höher als der Druck im Behälter. Damit schließt das Rückschlagventil und unterbindet den Durchfluss in beide Richtungen.

Die Verstellbewegung des Messkolbens 11 bis zum Erreichen des Gleichgewichtszustands wird über die Sensoreinrichtung 18 sensiert. Wird hierbei festgestellt, dass die Verstellbewegung einen Grenzwert überschreitet, so deutet dies auf zu viel Luft in der Dosiervolumenmesseinrichtung 1 hin, und es wird ein Fehlersignal erzeugt.

In einem zweiten, darauffolgenden Schritt wird der Sprühvorgang durchgeführt. Die Sprühdüse 5 öffnet, so dass Trennmittel austreten kann. Durch das Fließen von Trennmittel aus dem Verstellraum 8 kann der Messkolben 11, der unter dem Druck aus dem Druckluftanschluss 12 entsteht, eine weitere Verstellbewegung nach links in Richtung des Luftreservoirs 15 durchführen, bis der Sprühvorgang beendet ist und die Sprühdüse 5 wieder schließt. Aus dieser weiteren Verstellbewegung des Messkolbens 11, die bis zum Erreichen eines zweiten Gleichgewichtszustands erfolgt und die über die Sensoreinrichtung 18 erfasst wird, kann auf das Volumen des ausgebrachten Trennmittels geschlossen werden.

Nach dem Aussprühen des Trennmittels über die Sprühdüse 5 wird die Druckluftzufuhr über den Druckluftanschluss 12 beendet, woraufhin das Rückschlagventil in der Zuströmleitung 6 öffnet und Trennmittel aus dem Trennmittelbehälter 3 in den Verstellraum 8 nachströmen kann. Durch den Druck des einströmenden Trennmittels wandert der Messkolben 11 in der Darstellung gemäß Fig. 3 nach rechts in Richtung des Wegaufnehmers 21. Nach dem Befüllen des Verstellraums 8 mit Trennmittel kann der Druckluftanschluss 12 wieder geöffnet und Druckluft in den Verstellraum 8 eingeleitet werden, woraufhin ein neuer Zyklus beginnt.

Wie Fig. 4 zu entnehmen ist, befindet sich an der Mantelfläche des Messkolbens 11 eine umlaufende, ringförmige Aufnahmenut 22, in die der Kolbendichtring 17 (Fig. 3) einsetzbar ist.

Soweit wie vorstehend beschrieben eine Sprühdüse 5 geöffnet oder geschlossen wird, kann dies eine einzelne Sprühdüse 5, mehrere Sprühdüsen 5 oder sämtliche Sprühdüsen 5 betreffen.

## Patentansprüche

1. Dosiervolumenmesseinrichtung zum Messen des Volumens eines über eine Sprühdüsenvorrichtung (4) auszubringenden Trennmittels, umfassend einen Messkolben (11), der in einem Verstellraum (8) in einem Messgehäuse (2) verstellbar gelagert ist, wobei das Trennmittel über eine Zuströmöffnung (7) in den Verstellraum (8) hineinleitbar und über eine Abströmöffnung (9) aus dem Verstellraum (8) ableitbar ist, und mit einer Sensoreinrichtung (18) zur Ermittlung der Stellbewegung des Messkolbens (11) im Verstellraum (8), **dadurch gekennzeichnet, dass** in eine Stirnseite des Messkolbens (11) ein Überströmkanal (16) eingebracht ist, der den Innenraum des als Hohlkörper ausgebildeten Messkolbens (11) mit dem Verstellraum (8) verbindet.

2. Dosiervolumenmesseinrichtung nach Anspruch 1,
**dadurch gekennzeichnet,**
**dass** auf der der Zuström- (7) und Abströmöffnung (9) abgewandten Seite des Messkolbens (11) ein Kolbenverstellmittel auf den Messkolben (11) wirkt.

3. Dosiervolumenmesseinrichtung nach Anspruch 2,
**dadurch gekennzeichnet,**
**dass** das Kolbenverstellmittel Druckluft ist, die in den Verstellraum (8) auf der dem Trennmittel abgewandten Seite des Messkolbens (11) einleitbar ist.

4. Dosiervolumenmesseinrichtung nach einem der Ansprüche 1 bis 3,
**dadurch gekennzeichnet,**
**dass** auf den Messkolben (11) eine einstellbare Kraft wirkt, die den Messkolben (11) gegen das Trennmittel im Verstellraum (8) beaufschlagt.

5. Dosiervolumenmesseinrichtung nach einem der Ansprüche 1 bis 4,
**dadurch gekennzeichnet,**
**dass** die Sensoreinrichtung (18) zur Ermittlung der Stellbewegung des Messkolbens (11) im Verstellraum (8) einen Signalgeber (19) auf dem Messkolben (11) und einen Signalnehmer (20) am oder im Messgehäuse (2) umfasst.

6. Dosiervolumenmesseinrichtung nach Anspruch 5,
**dadurch gekennzeichnet,**
**dass** der Signalgeber (19) ein Permanentmagnet ist, der auf dem Messkolben (11) befestigt ist.

7. Dosiervolumenmesseinrichtung nach Anspruch 5 oder 6, **dadurch gekennzeichnet,**
**dass** der Signalnehmer (20) eine Messstange ist, die in den Verstellraum (8) hineinragt.

8. Dosiervolumenmesseinrichtung nach Anspruch 7,
**dadurch gekennzeichnet,**
**dass** die Messstange (20) von dem als Hohlkörper ausgebildeten Messkolben (11) umgriffen ist.

9. Dosiervolumenmesseinrichtung nach einem der Ansprüche 5 bis 8,
**dadurch gekennzeichnet,**
**dass** die Sensoreinrichtung (18) einen Wegaufnehmer (21) an einer Stirnseite des Verstellraums (8) umfasst, in welchem das Messsignal des Signalnehmers (20) aufgenommen wird.

10. Dosiervolumenmesseinrichtung nach einem der Ansprüche 1 bis 9,
**dadurch gekennzeichnet,**
**dass** an der Mantelfläche des Messkolbens (11) ein Kolbendichtring (17) angeordnet ist, der das Trennmittel im Verstellraum (8) von einem Kolbenverstellmittel separiert.

11. Dosiervolumenmesseinrichtung nach einem der Ansprüche 1 bis 10,
**dadurch gekennzeichnet,**
**dass** in eine Zufuhrleitung des Trennmittels, die über die Zuströmöffnung (7) in den Verstellraum (8) mündet, ein Rückschlagventil integriert ist.

12. Kombination eines Sprühwerkzeugs, das eine Sprühdüsenvorrichtung (4) mit einer oder mehreren Sprühdüsen (5) zum Aufbringen eines Trennmittels in einen Hohlraum oder auf eine Oberfläche einer Gussform umfasst, mit einer Dosiervolumenmesseinrichtung nach einem der Ansprüche 1 bis 11 zum Messen des Volumens des über die Sprühdüsenvorrichtung (4) auszubringenden Trennmittels.

13. Verfahren zum Betätigen einer Dosiervolumenmesseinrichtung nach einem der Ansprüche 1 bis 11,
**dadurch gekennzeichnet,**
**dass** mittels der Dosiervolumenmesseinrichtung (1) der Verstellweg des Messkolbens (11) ermittelt und aus dem Verstellweg das Volumen des über die Sprühdüsenvorrichtung (4) ausgebrachten Trennmittels berechnet wird.

14. Verfahren nach Anspruch 13,
**dadurch gekennzeichnet,**
**dass** in einem vorgelagerten Schritt vor dem Ausbringen des Trennmittels Druckluft in den Bereich einer Stirnseite des Messkolbens (11) geleitet und der Verstellweg des Messkolbens (11) sensiert wird, wobei ein Fehlersignal erzeugt wird, falls der Verstellweg einen Grenzwert übersteigt.

## Claims

1. Dose volume measuring device for measuring the volume of a release agent to be discharged via a spray nozzle device (4), comprising a measuring piston (11) which is adjustably mounted in an adjustment space (8) in a measuring housing (2), the release agent being able to be introduced into the adjustment space (8) via an inflow opening (7) and being able to be removed from the adjustment space (8) via an outflow opening (9), and comprising a sensor device (18) for determining the adjusting movement of the measuring piston (11) in the adjustment space (8), **characterized in that** an overflow channel (16) is introduced into an end face of the measuring piston (11), which overflow channel (16) connects the interior of the measuring piston (11), designed as a hollow body, to the adjustment space (8).

2. Dose volume measuring device according to Claim 1, **characterized in that** a piston adjustment means acts on the measuring piston (11) on that side of the measuring piston (11) facing away from the inflow opening (7) and outflow opening (9).

3. Dose volume measuring device according to Claim 2, **characterized in that** the piston adjustment means is compressed air, which can be introduced into the adjustment space (8) on that side of the measuring piston (11) facing away from the release agent.

4. Dose volume measuring device according to one of Claims 1 to 3, **characterized in that** an adjustable force acts on the measuring piston (11), which adjustable force forces the measuring piston (11) against the release agent in the adjustment space (8).

5. Dose volume measuring device according to one of Claims 1 to 4, **characterized in that** the sensor device (18) for determining the adjusting movement of the measuring piston (11) in the adjustment space (8) comprises a signal transmitter (19) on the measuring piston (11) and a signal receiver (20) on or in the measuring housing (2).

6. Dose volume measuring device according to Claim 5, **characterized in that** the signal transmitter (19) is a permanent magnet attached to the measuring piston (11).

7. Dose volume measuring device according to Claim 5 or 6, **characterized in that** the signal receiver (20) is a measuring rod that protrudes into the adjustment space (8).

8. Dose volume measuring device according to Claim 7, **characterized in that** the measuring rod (20) is encompassed by the measuring piston (11) designed as a hollow body.

9. Dose volume measuring device according to one of Claims 5 to 8, **characterized in that** the sensor device (18) comprises a displacement transducer (21), which is arranged at an end face of the adjustment space (8) and in which the measurement signal of the signal receiver (20) is received.

10. Dose volume measuring device according to one of Claims 1 to 9, **characterized in that** a piston sealing ring (17) is arranged on the lateral surface of the measuring piston (11) and separates the release agent in the adjustment space (8) from a piston adjustment means.

11. Dose volume measuring device according to one of Claims 1 to 10, **characterized in that** a non-return valve is integrated in a release agent feed line which opens into the adjustment space (8) via the inflow opening (7).

12. Combination of a spray tool, comprising a spray nozzle device (4) with one or more spray nozzles (5) for applying a release agent into a cavity or onto a surface of a casting mould, with a dose volume measuring device according to one of Claims 1 to 11 for measuring the volume of the release agent to be discharged via the spray nozzle device (4).

13. Method for actuating a dose volume measuring device according to one of Claims 1 to 11, **characterized in that** the adjustment path of the measuring piston (11) is determined by means of the dose volume measuring device (1), and the volume of the release agent discharged via the spray nozzle device (4) is calculated from the adjustment path.

14. Method according to Claim 13, **characterized in that** in a preceding step, before the release agent is discharged, compressed air is fed into the region of an end face of the measuring piston (11), and the adjustment path of the measuring piston (11) is sensed, with an error signal being generated if the adjustment path exceeds a limit value.

## Revendications

1. Dispositif de mesure de volume de dosage pour mesurer le volume d'un agent de démoulage à distribuer par l'intermédiaire d'un appareil à buse de pulvérisation (4), comprenant un piston de mesure (11) qui est monté de manière réglable dans une chambre de réglage (8) dans un boîtier de mesure (2), l'agent de démoulage pouvant être introduit dans la chambre de réglage (8) par l'intermédiaire d'une ouverture d'entrée (7) et pouvant être évacué de la chambre de réglage (8) par l'intermédiaire d'une ouverture de sortie (9), et comprenant un dispositif de détection (18) pour déterminer le mouvement de réglage du piston de mesure (11) dans la chambre de réglage (8), **caractérisé en ce que**, dans un côté frontal du piston de mesure (11), est ménagé un canal de transfert (16), qui relie l'espace intérieur du piston de mesure (11) configuré sous forme de corps creux à la chambre de réglage (8).

2. Dispositif de mesure de volume de dosage selon la revendication 1, **caractérisé en ce qu'**un moyen de réglage de piston agit sur le piston de mesure (11) sur le côté du piston de mesure (11) détourné de l'ouverture d'entrée (7) et de sortie (9).

3. Dispositif de mesure de volume de dosage selon la revendication 2, **caractérisé en ce que** le moyen de réglage de piston est de l'air comprimé, qui peut être introduit dans la chambre de réglage (8) sur le côté du piston de mesure (11) détourné de l'agent de démoulage.

4. Dispositif de mesure de volume de dosage selon l'une quelconque des revendications 1 à 3, **caractérisé en ce qu'**une force ajustable agit sur le piston de mesure (11), qui sollicite le piston de mesure (11) contre l'agent de démoulage dans la chambre de réglage (8).

5. Dispositif de mesure de volume de dosage selon l'une quelconque des revendications 1 à 5, **caractérisé en ce que** le dispositif de détection (18) comprend, pour déterminer le mouvement de réglage du piston de mesure (11) dans la chambre de réglage (8), un émetteur de signaux (19) sur le piston de mesure (11) et un récepteur de signaux (20) sur ou dans le boîtier de mesure (2).

6. Dispositif de mesure de volume de dosage selon la revendication 5, **caractérisé en ce que** l'émetteur de signaux (19) est un aimant permanent qui est fixé sur le piston de mesure (11).

7. Dispositif de mesure de volume de dosage selon la revendication 5 ou 6, **caractérisé en ce que** le récepteur de signaux (20) est une tige de mesure qui pénètre dans la chambre de réglage (8).

8. Dispositif de mesure de volume de dosage selon la revendication 7, **caractérisé en ce que** la tige de mesure (20) est entourée par le piston de mesure (11) configuré sous forme de corps creux.

9. Dispositif de mesure de volume de dosage selon l'une quelconque des revendications 5 à 8, **caractérisé en ce que** le dispositif de détection (18) comprend un capteur de course (21) sur un côté frontal de la chambre de réglage (8), dans lequel le signal de mesure du récepteur de signaux (20) est enregistré.

10. Dispositif de mesure de volume de dosage selon l'une quelconque des revendications 1 à 9, **caractérisé en ce qu'**une bague d'étanchéité de piston (17) est agencée sur la surface d'enveloppe du piston de mesure (11), qui sépare l'agent de démoulage dans la chambre de réglage (8) d'un moyen de réglage de piston.

11. Dispositif de mesure de volume de dosage selon l'une quelconque des revendications 1 à 10, **caractérisé en ce qu'**un clapet anti-retour est intégré dans une conduite d'amenée de l'agent de démoulage, qui débouche dans la chambre de réglage (8) par l'intermédiaire de l'ouverture d'entrée (7).

12. Combinaison d'un outil de pulvérisation, qui comprend un appareil à buse de pulvérisation (4) comprenant une ou plusieurs buses de pulvérisation (5) pour appliquer un agent de démoulage dans une cavité ou sur une surface d'un moule, avec un dispositif de mesure de volume de dosage selon l'une quelconque des revendications 1 à 11 pour mesurer le volume de l'agent de démoulage à distribuer par l'intermédiaire de l'appareil à buse de pulvérisation (4).

13. Procédé d'actionnement d'un dispositif de mesure de volume de dosage selon l'une quelconque des revendications 1 à 11, **caractérisé en ce que** la course de réglage du piston de mesure (11) est déterminée au moyen du dispositif de mesure de volume de dosage (1) et le volume de l'agent de démoulage distribué par l'intermédiaire de l'appareil à buse de pulvérisation (4) est calculé à partir de la course de réglage.

14. Procédé selon la revendication 13, **caractérisé en ce que**, dans une étape en amont, avant la distribution de l'agent de démoulage, de l'air comprimé est conduit dans la zone d'un côté frontal du piston de mesure (11) et la course de réglage du piston de mesure (11) est détectée, un signal d'erreur étant généré si la course de réglage dépasse une valeur limite.
